# EUROPEAN PATENT APPLICATION

(11) **EP 1 157 903 A2**
(43) Date of publication of application: **28.11.2001**
(21) Application number: 01201365.2
(22) Date of filing: 13.04.2001
(51) Int. Cl.: B60R 21/20

(54) **Airbag module**

(30) Priority: 19.05.2000 GB 0011998
(71) Applicant: Delphi Technologies, Inc., Troy, MI 48007 (US)
(72) Inventor: ZImmerbeutel, Bernd U., 42857 Remscheid (DE); Varcus, Johannes-Alexander, 45549 Sprockhoevel (DE)
(74) Representative: Denton, Michael John

(57) **Abstract**

An airbag module (10) for a motor vehicle comprising a housing (12); a door (14) having a pivot axis (22) and a tear line (20), and normally closing the housing; an inflatable airbag cushion (16) positioned in the housing; and an inflator (18) for inflating the airbag cushion; wherein the pivot axis extends around at least a portion of the outer circumference of the door; wherein the door comprises at least three portions (26) which are defined by the tear line; and wherein the tear line comprises at least three lines (32) each of which extend radially outwards from substantially the centre of the door. Reduces the risk of the door encountering an obstruction on actuation of the airbag module.

## Description

### Technical Field

The present invention relates to an airbag module for a motor vehicle.

### Background of the Invention

An airbag module generally comprises a housing which is closed by a door, an inflatable cushion, and an inflator. The door is defined by a tear (or weakened) line and a hinge or pivot axis. On detection of the need to inflate the cushion (by one or more sensors), the inflator is actuated to inflate the cushion. The act of inflating the cushion causes the weakened line defining the door to tear such the door pivots open to allow the cushion to fully inflate. In general, the tear line is substantially U-shaped and extends around a portion of the circumference of the door, with the remaining portion of the circumference defining a hinge or pivot axis for the door on opening. Any obstruction (such as an out-of-position vehicle occupant) which prevents the door from opening fully can affect the efficiency of the protection system.

### Summary of the Invention

It is an object of the present invention to overcome the above mentioned problem.

An airbag module in accordance with the present invention for a motor vehicle comprises a housing; a door having a pivot axis and a tear line, and normally closing the housing; an inflatable airbag cushion positioned in the housing; and an inflator for inflating the airbag cushion; wherein the pivot axis extends around at least a portion of the outer circumference of the door; wherein the door comprises at least three portions which are defined by the tear line; and wherein the tear line comprises at least three lines each of which extend radially outwards from substantially the centre of the door.

The present invention reduces the risk of the door encountering an obstruction on actuation of the airbag module.

### Brief Description of the Drawings

The present invention will now be described, by way of example, with reference to the accompanying drawings, in which:-
Figure 1 is a front view of an airbag module in accordance with the present invention with the door in the closed position;
Figure 2 is a front view of the airbag module of Figure 1 with the door in the open position; and
Figure 3 is a front view of a second embodiment of airbag module in accordance with the present invention with the door in the open position.

### Description of the Preferred Embodiment

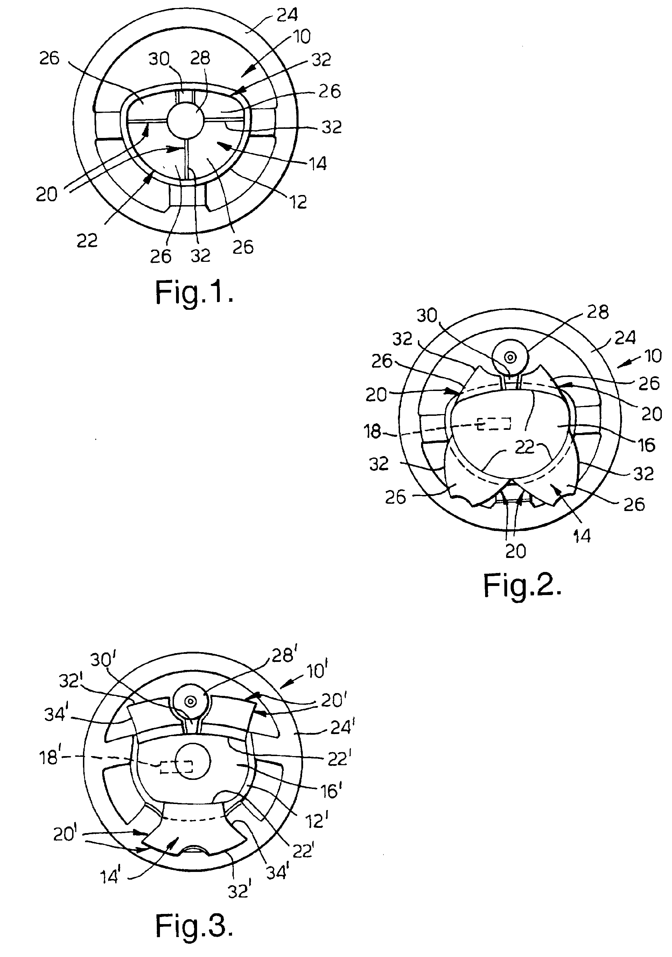

Referring to Figures 1 and 2, the airbag module 10 comprises a housing 12 which is closed at one end by a door 14; an inflatable airbag cushion 16 which (prior to inflation) is located in the housing behind the door; and an inflator 18 for inflating the airbag cushion on actuation of the airbag module. In this arrangement, the airbag module 10 is for the protection of a driver seated in the driver's seat of a motor vehicle, and the door 14 is in the steering wheel 24 of the vehicle. The door 14 is normally attached to the airbag module 10, and defined by, a weakened or tear line 20, and a pivot or hinge axis 22. On detection of a predetermined condition of the vehicle, the airbag module 10 is actuated whereby the weakened line 20 is torn and the door 14 opens by pivoting about the hinge axis 22 in a manner well known to those skilled in the art.

In accordance with the embodiment of Figures 1 and 2, the tear line 20 of the airbag module is substantially X-shaped, and the pivot or hinge axis 22 extends substantially around the outer circumference of the door 14. In this embodiment, the door 14 has five portions 26,30 which, in the closed position of the door (Figure 1), are integrally joined, and which are defined by the tear line 20. On actuation of the airbag module 10, the tear line 20 is torn and the portions 26, 30 of the door 14 are separated from one another and pivot outwardly from their outer hinge axis 22, such that the door opens (Figure 2). With this arrangement, as the door 14 is defined by a number of portions 26, 30 each having a smaller surface area than the total surface area of the door, the risk of the portions hitting an obstruction on opening of the door is reduced. The tear line 20 is preferably split when the inflator 18 begins inflating the cushion 16. As shown in Figures 1 and 2, the vehicle emblem 28 is preferably mounted on one of the portions 30 of the door 14, which splits from the other portions 26 on actuation of the airbag module 10. In this embodiment, the tear line comprises five lines 32 each of which extends radially outwards from substantially the centre of the door 14.

Figure 3 shows an alternative embodiment to the arrangement shown in Figures 1 and 2 in which like parts have been given the same reference numeral except with a prime ('). In Figure 3, the airbag module 10' includes a door 14' which is defined by a weakened or tear line 20' and a pivot or hinge axis 22', in which the tear line is substantially H-shaped (with additional parallel lines extending perpendicularly from the central arm of the H), and the pivot axis extends around a portion of the outer circumference of the door. In this arrangement, the door 14' has four portions which, in the closed position of the door, are integrally joined, and which are defined by the tear line 20'. On actuation of the airbag module 10', the tear line 20' is torn and the portions 26', 30' of the door 14' are separated from one another and pivot outwardly from their outer hinge axis 22', such that the door opens (Figure 3). With this arrangement, as the door 14' is defined by a number of portions 26', 30' having a smaller surface area than the total surface area of the door, the risk of the portions hitting an obstruction on opening of the door is reduced. The tear line 20' is preferably split when the inflator 18' begins inflating the cushion 16', As shown in Figure 3, the vehicle emblem 28' is preferably mounted on one of the portions 30' of the door 14', which splits from the other portions 26' on actuation of the airbag module 10'. In this embodiment, the tear line comprises four lines 32' each of which extends radially outwards from substantially the centre of the door 14', and two lines 34' each of which extend around a portion of the outer circumference of the door.

In accordance with the present invention, the door of the airbag module is defined by at least three portions which are separated by a weakened or tear line, the tear line being defined by a number of lines extending radially outwards from the central area of the door, and preferably with at least two of the lines extending substantially diametrically across the door. Such an arrangement reduces the risk of the door encountering an obstruction on actuation of the airbag module and opening of the door.

In an alternative to the above described embodiments, the airbag module may be adapted for installation in the dashboard of the motor vehicle for a passenger seated in the front passenger seat of the vehicle. It will also be appreciated that other arrangements for the tear line, and the shape of the portions of the door, may be used.

## Claims

1. An airbag module (10) for a motor vehicle comprising a housing (12); a door (14) having a pivot axis (22) and a tear line (20), and normally closing the housing; an inflatable airbag cushion (16) positioned in the housing; and an inflator (18) for inflating the airbag cushion; wherein the pivot axis extends around at least a portion of the outer circumference of the door; wherein the door comprises at least three portions (26) which are defined by the tear line; and wherein the tear line comprises at least three lines (32) each of which extend radially outwards from substantially the centre of the door.

2. An airbag module as claimed in Claim 1, wherein at least two of the lines (32) of the tear line (20) define a line extending diametrically across the door (14).

3. An airbag module as claimed in Claim 1 or Claim 2, wherein the tear line (20) is substantially X-shaped.

4. An airbag module as claimed in Claim 3, wherein the pivot axis (22) extends around substantially the whole of the outer circumference of the door (14).

5. An airbag module as claimed in Claim 1 or Claim 2, wherein the tear line (20') includes a substantially H-shaped part, lines (34) of which extend around a portion of the outer circumference of the door (14').
